# FASCICULE DE BREVET EUROPEEN

(11) **EP 3 571 080 B1**
(45) Date de publication et mention de la délivrance du brevet: **01.09.2021**
(21) Numéro de dépôt: 18703042.4
(22) Date de dépôt: 03.01.2018
(51) Int. Cl.: B60K 11/08

(54) **DISPOSITIF D'OBTURATION D'ENTREE D'AIR DE FACE AVANT DE VEHICULE AUTOMOBILE ET PROCEDE DE FABRICATION**
VORRICHTUNG ZUM ABDICHTEN EINES FRONTSEITIGEN LUFTEINLASSES EINES KRAFTFAHRZEUGS UND VERFAHREN ZUR HERSTELLUNG DAVON
DEVICE FOR SEALING A MOTOR VEHICLE FRONT FACE AIR INTAKE AND METHOD FOR MANUFACTURING SAME

(30) Priorité: 18.01.2017 FR 1750392
(43) Date de publication de la demande: 27.11.2019
(73) Titulaire: Valeo Systemes Thermiques, 78322 Le Mesnil Saint-Denis Cedex (FR)
(72) Inventeur: HERLEM, Jean-Paul, 78322 Le Mesnil Saint Denis Cedex (FR); ANDRE, Stephan, 78322 Le Mesnil Saint Denis Cedex (FR)
(74) Mandataire: Tran, Chi-Hai
(86) Numéro de dépôt international: PCT/FR2018/050010
(87) Numéro de publication internationale: WO 2018/134494

(56) Documents cités:
- EP-A1- 0 500 430
- DE-A1- 3 605 064
- DE-A1-102013 007 158
- US-A- 4 753 288

## Description

La présente invention concerne les dispositifs d'obturation et plus précisément un dispositif d'obturation d'entrée d'air de face avant de véhicule automobile ainsi que son procédé de fabrication.

Les faces avant de véhicules automobiles sont généralement composées de deux entrées d'air principales dites voie haute et voie basse. Ces entrées d'air sont généralement séparées par une poutre pare-choc. Derrière cette poutre pare-choc sont placés les échangeurs de chaleur du véhicule automobile, comme par exemple celui utilisé pour la climatisation de l'habitacle et/ou encore celui utilisé pour le refroidissement du moteur.

Il est également connu de disposer, dans le trajet d'air passant par les entrées d'air principales, plus généralement la voie basse, un cadre support comportant une multitude de volets montés pivotant autour d'axes parallèles et propres à prendre une multitude de positions angulaires différentes, comprises entre une position d'ouverture et une position d'obturation, sous l'action de moyens de commande appropriés.

On obtient ainsi un dispositif d'obturation s'apparentant à une jalousie qui permet d'ajuster le débit d'air traversant les entrées d'air et arrivant aux échangeurs de chaleur. Il est ainsi possible d'optimiser l'efficacité de ces échangeurs de chaleur en fonction des besoins et en faisant varier la quantité d'air qu'ils reçoivent. De plus, à grande vitesse, les volets en position d'obturation permettent de diminuer le coefficient de traînée du véhicule et ainsi améliorent l'aérodynamisme dudit véhicule.

Les volets sont généralement disposés dans les paliers sur le cadre support et leur fixation peut être problématique et compliquée, notamment lors de la fabrication du dispositif d'obturation ou alors lors d'une intervention pour un entretien ou une réparation.

Un des buts de la présente invention est donc de remédier au moins partiellement aux inconvénients de l'art antérieur et de proposer un dispositif d'obturation amélioré notamment au niveau de la fixation des volets ainsi que son procédé de fabrication.

La présente invention concerne donc un dispositif d'obturation pour entrée d'air de face avant de véhicule automobile, comprenant :
∘ un cadre support dans lequel est installé au moins un ensemble de volets pivotants autour d'axes de pivotement entre une position d'obturation et une position d'ouverture,
∘ au moins un élément de commande configuré pour piloter le positionnement des volets,

le cadre support comportant au moins une rangée de paliers recevant les axes de pivotement des volets disposée sur un montant latéral,
le dispositif d'obturation comportant au moins un élément de blocage recouvrant une rangée de palier et maintenant les axes de pivotement des volets dans lesdits paliers,
ledit élément de blocage comprenant un corps et au moins un organe de liaison comportant une base le reliant audit corps de l'élément de blocage et une tête de largeur supérieure à ladite base,
ledit montant latéral comportant, sur sa face comprenant la au moins une rangée de palier, au moins une rainure débouchant sur un coté extérieur dudit montant latéral et de préférence de forme complémentaire audit au moins un organe de liaison, ledit au moins un organe de liaison étant inséré dans la au moins une rainure.

Une telle fixation des volets 3 au moyen d'un tel élément de blocage permet un montage simplifié et rapide du dispositif d'obturation car il ne nécessite pas l'utilisation d'outils spécifiques pour assurer le maintien des volets dans les paliers.

Selon un aspect de l'invention, l'organe de liaison fait saillie du corps de l'élément de blocage.

Selon un aspect de l'invention, l'au moins un organe de liaison a une forme générale en T.

Selon un autre aspect de l'invention, l'élément de blocage est fixé sur le cadre support comprenant la rangée de paliers par une fixation à emboîtage élastique de sorte à retenir le au moins un organe de liaison dans la au moins une rainure.

Selon un autre aspect de l'invention, la fixation à emboîtage élastique comporte une languette élastique dont une première extrémité comporte un embout faisant sailli vers l'extérieur du cadre support et dont une deuxième extrémité est reliée audit cadre support, ledit embout étant destiné à venir s'insérer dans une ouverture ménagée dans l'élément de blocage.

Selon un autre aspect de l'invention, la fixation à emboîtage élastique comporte une languette élastique dont une première extrémité comporte un embout faisant sailli de l'élément de blocage et dont une deuxième extrémité est reliée à l'élément de blocage, ledit embout étant destiné à venir s'insérer dans une ouverture ménagée dans le cadre support.

Selon un autre aspect de l'invention, les volets comportent des flasques à leurs extrémités et l'élément de blocage comporte des joues semi-sphériques venant recouvrir les flasques desdits volets.

Selon un autre aspect de l'invention, la au moins une rangée de paliers est réalisée sur la face avant du cadre support.

La présente invention concerne également un procédé de fabrication d'un dispositif d'obturation tel que décrit précédemment, et comportant, après le montage des volets sur le cadre support, les étapes suivantes :
∘ mise en regard du au moins un organe de liaison de l'élément de blocage et de la au moins une rainure du cadre support,
∘ translation de l'élément de blocage de sorte que l'au moins un organe de liaison s'insère dans l'au moins une rainure et de sorte que l'élément de blocage recouvre une rangée de paliers.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective de face d'un dispositif d'obturation en position d'obturation,
- la figure 2 montre une représentation schématique en perspective éclatée d'un dispositif d'obturation,
- la figure 3 montre une représentation schématique en perspective de la liaison entre un ensemble de volets et un organe de commande,
- la figure 4 montre une représentation schématique en perspective d'un organe de commande,
- les figures 5 et 6 montrent une représentation schématique partielle en perspective d'un cadre support et de son logement,
- la figure 7 montre une représentation schématique en perspective d'un actionneur,
- la figure 8 montre une représentation schématique partielle en perspective de la fixation d'un actionneur selon un premier mode de réalisation,
- la figure 9 montre une représentation schématique en perspective de la fixation d'un actionneur selon un deuxième mode de réalisation,
- les figures 10 et 11 montrent une représentation schématique partielle en perspective d'un cadre support et de la fixation des volets,
- les figures 12 à 15 montrent une représentation schématique en perspective d'un dispositif d'obturation selon différentes étapes de son procédé de fabrication.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la présente description, on peut indexer certains éléments ou paramètres, comme par exemple premier élément ou deuxième élément ainsi que premier paramètre et deuxième paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tels ou tels critères.

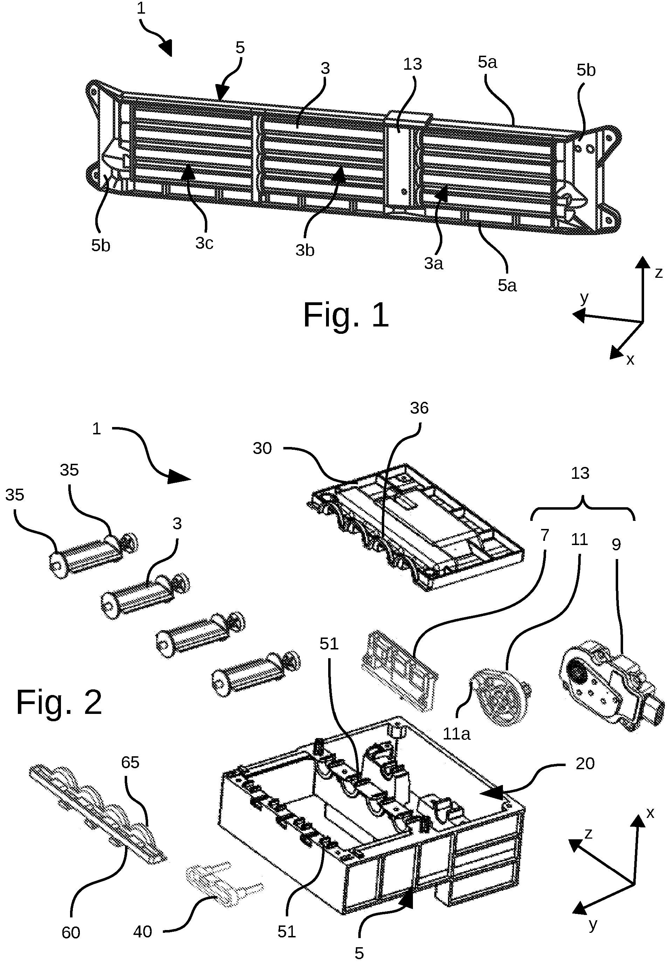

Sur les figures 1 à 6 et 12 à 15, un trièdre XYZ montre l'orientation des différentes pièces notamment lorsqu'elles sont montées sur un véhicule automobile. Les axes de ce trièdre peuvent ainsi correspondre aux différentes orientations du véhicule automobile. L'axe X peut ainsi correspondre à la longueur du véhicule, le vecteur X indiquant l'avant du véhicule. L'axe Y peut quant à lui correspondre à la largeur du véhicule et l'axe Z à sa hauteur.

La figure 1 montre une représentation schématique en perspective d'un dispositif d'obturation 1 en position d'obturation. Cette figure 1 montre plus exactement la face externe du dispositif d'obturation 1, c'est-à-dire la face dirigée vers l'extérieur du véhicule automobile lorsque le dispositif d'obturation 1 est assemblé sur le véhicule. Le dispositif d'obturation 1 est disposé en face avant du véhicule automobile, au devant d'échangeurs de chaleurs tels qu'un radiateur, ou d'autres échangeurs comme par exemple un refroidisseur d'air de suralimentation, un condenseur d'un circuit de climatisation.

Le dispositif d'obturation 1 comporte un cadre support 5 comprenant notamment deux traverses longitudinales 5a, s'étendant parallèlement à l'axe Y du trièdre, et au moins deux montants latéraux 5b, s'étendant parallèlement à l'axe Z du trièdre, et reliant les traverses longitudinales 5a. Le cadre support 5 est réalisé par exemple en matière plastique. Les deux traverses longitudinales 5a et les au moins deux montants latéraux 5b sont ainsi moulés. Afin d'améliorer la rigidité du cadre support 5, ce dernier peut être moulé en une seule pièce. Le cadre support 5 comporte notamment une face avant, c'est-à-dire qui est orientée vers l'avant du véhicule automobile, selon le vecteur X du trièdre, et une face arrière, c'est-à-dire qui est orientée vers l'arrière du véhicule automobile, à l'inverse du vecteur X du trièdre.

Au sein du cadre support 5 est installée une pluralité de volets 3, ces derniers forment des rangs de volets 3 parallèles entre eux et forment des ensembles 3a, 3b et 3c de volets 3. Le dispositif d'obturation 1 comporte également un élément de commande 13 configuré pour piloter la rotation du ou des volets 3 autour d'un axe de pivotement A, entre une position d'ouverture, où les volets 3 sont positionnés de sorte qu'un flux d'air puisse traverser le dispositif d'obturation 1, notamment à l'intérieur du cadre support 5, et une position d'obturation illustrée à la figure 1, où les volets 3 sont positionnés de sorte qu'un flux d'air ne puisse pas traverser le dispositif d'obturation 1. L'élément de commande 13 peut être disposé sur un côté du dispositif d'obturation 1 au niveau d'un montant latéral 5b ou encore entre deux ensembles de volets 3 comme illustré sur la figure 1.

La figure 1 montre plus spécifiquement un dispositif d'obturation 1 comprenant trois ensembles 3a, 3b et 3c de volets 3.

Comme le montre la figure 2 qui est une représentation schématique éclatée d'un dispositif d'obturation 1, l'élément de commande 13 comporte notamment au moins un organe de commande 7 relié aux volets 3, un actionneur 9, et un levier 11 relié d'une part à l'actionneur 9 et d'autre part à l'organe de commande 7 de sorte à pouvoir faire pivoter les volets 3.

Le cadre support 5 comporte un logement 20 dans lequel est disposé l'élément de commande 13 et tout ses éléments. Le logement 20 comporte une ouverture sur la face avant du cadre support 5. Le logement 20 est borgne, c'est-à-dire qu'il comporte un fond sur la face arrière du cadre support 5. Un capot 30 vient recouvrir l'ouverture du logement 20 en face avant du cadre support 5 afin de protéger l'élément de commande 13.

Le fait que le logement 20 comporte une ouverture sur la face avant du cadre support 5 permet tout d'abord un accès plus aisé à l'élément de commande 13, notamment dans le cas d'une réparation ou d'un entretien. L'actionneur 9, le levier 11 et l'organe de commande 7 sont ainsi directement accessibles par l'avant du véhicule ce qui évite de devoir retirer complètement le dispositif d'obturation 1 du véhicule automobile pour pouvoir y accéder.

L'ouverture du logement 20 est notamment suffisante afin de pouvoir installer et retirer l'ensemble des éléments de l'élément de commande 13.

Le cadre support 5 comporte également au moins deux rangées parallèles de paliers 51 d'engagement des axes de pivotement A des volets 3. Ces rangées de paliers 51 sont disposées sur le cadre support 5 de sorte à recevoir les axes de pivotement A des volets 3. Une rangée de paliers 51 est disposée de part et d'autre de chaque ensemble de volets 3. Plus particulièrement, ces rangées de paliers 51 sont parallèles à l'axe Z du trièdre et disposées sur la face avant du cadre support 5.

Le fait que les paliers 51 soient disposés sur la face avant du cadre support 5 permet ainsi de monter les volets 3 par l'avant du cadre support 5. De même que pour les éléments présents dans le logement 20, les volets 3 sont ainsi directement accessibles par l'avant du véhicule ce qui évite de devoir retirer complètement le dispositif d'obturation 1 du véhicule automobile pour pouvoir y accéder, notamment dans le cas d'une réparation ou d'un entretien. De plus, lorsque le véhicule automobile est en mouvement, les volets 3 sont plaqués contre le cadre support 5 et donc leur fixation à ce dernier a moins besoin d'être suffisamment forte pour résister à la pression exercée par l'air.

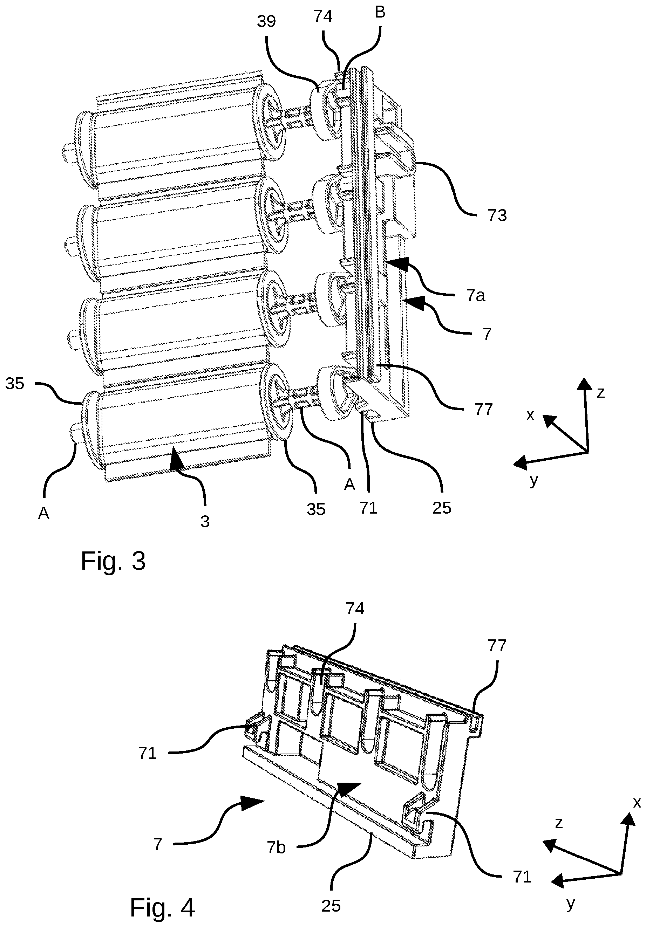

La figure 3 montre plus en détail la liaison entre les volets 3 et l'organe de commande 7. Les volets 3 comportent chacun un bras de commande 39, perpendiculaire à leur axe de pivotement A et portant un axe de liaison B permettant la liaison entre ledit bras de commande 39 et l'organe de commande 7. Le bras de commande 39 vient généralement de matière avec les volets 3.

Les volets 3 peuvent pivoter chacun autour de leur axe de pivotement A défini par leur liaison avec le cadre support 5 au niveau des paliers 51. Les axes de liaison B entre les volets 3 et l'organe de commande 7 sont excentrés par rapport aux axes de pivotement A de sorte qu'un mouvement de translation, parallèlement à l'axe Z du trièdre, de l'organe de commande 7, sous l'action de l'actionneur 9, entraîne le pivotement des volets 3 autour de leurs axes de pivotement A respectifs et donc le passage desdits volets 3 d'une position à une autre.

Tous les volets 3 étant reliés au même organe de commande 7, le passage d'une position d'ouverture à une position d'obturation est synchrone pour tous les volets 3.

Comme illustré sur les figures 3 et 4, l'organe de commande 7 comporte sur une première face 7a (visible sur la figure 3), un premier logement oblong 73 dont le grand axe est orienté parallèlement à l'axe X et perpendiculairement au déplacement de l'organe de commande 7. Cette première face 7a est destinée à être orientée vers l'intérieur du logement 20 et ce premier logement oblong 73 est destiné à recevoir un pion 11a du levier 11. Ce premier logement oblong 73 est notamment disposé sur une face de l'organe de commande 7 opposée à sa face en liaison avec les volets 3. Le premier logement oblong 73 peut notamment être ouvert sur un de ses petits côtés afin de faciliter le montage et l'insertion du levier 11 dans le premier logement oblong 73.

Le fait que le premier logement oblong 73 a cette forme oblongue permet une conversion et une transmission du mouvement rotatif du levier 11 en un mouvement de translation rectiligne de l'organe de commande 7 sans qu'il y ait de déplacement en profondeur (selon l'axe X) de l'organe de commande 7. Lors de la translation de l'organe de commande 7, le levier 11 peut ainsi se déplacer dans le premier logement oblong 73 selon son grand axe et faire translater l'organe de commande 7.

L'organe de commande 7 peut comporter également sur une deuxième face 7b (visible sur la figure 4) au moins un deuxième logement oblong 74 dont le grand axe est également orienté perpendiculairement à la première liaison glissière. Cette deuxième face 7b est destinée à être orientée vers l'extérieur du logement 20 en direction des volets 3. Les deuxièmes logements oblong 74 sont quant à eux destinés à être connectés à un volet 3, plus précisément à son axe de liaison B. Ces deuxièmes logements oblongs 74 peuvent notamment être ouvert sur un de leurs petits côtés afin de faciliter le montage et l'insertion des axes de liaison B. Lors de la translation de l'organe de commande 7, les axes de liaison B des volets 3 peuvent ainsi se déplacer dans les deuxièmes logements oblongs 74 selon leur grands axes et transformer le mouvement rectiligne de translation de l'organe de commande 7 en un mouvement rotatif du bras de commande 39 autour de l'axe de rotation A et ainsi faire pivoter les volets 3.

Tous les volets 3 sont reliés au même organe de commande 7, le passage d'une position d'ouverture à une position d'obturation est synchrone pour tous les volets 3. Sur les figures 2 à 4, l'exemple d'organe de commande 7 est un organe de commande 7 simple qui ne commande qu'un ensemble de volets 3 disposé sur un seul côté de l'élément de commande 13. Dans le cas où un ensemble de volets 3 serait présent de part et d'autre de l'élément de commande 13 comme sur la figure 1, l'organe de commande 7 peut avoir une section en forme de U (non représentée) avec des deuxièmes logements oblongs 74 disposés sur les deux branches du U afin de commander les deux ensembles de volets 3 simultanément. Une traverse relie les deux branches du U et permet de transmettre un mouvement synchrone aux deux ensembles de volets 3. De plus cette section en forme de U permet de surmonter l'actionneur 9 et le levier 11 qui sont disposés dans le logement 20 entre les branches du U.

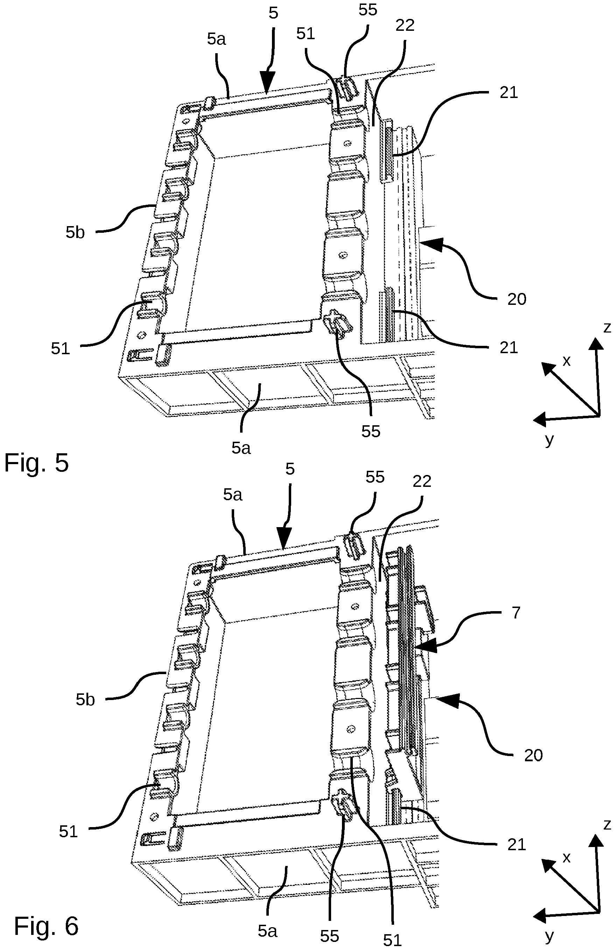

Comme illustré aux figures 5 et 6, l'organe de commande 7 est monté au sein du logement 20 par une première liaison glissière, réalisée entre une paroi latérale 22 interne dudit logement 20 et ledit organe de commande 7. Par paroi latérale 22 interne, on entend ici que la face de la paroi latérale 22 du logement 20 portant la première liaison glissière est une de ses faces internes située dans le plan formé par les axes X et Z, située à l'intérieur du logement 22. Cette première liaison glissière est configurée pour limiter les mouvements en profondeur (selon l'axe X) et latéraux (selon l'axe Y) de l'organe de commande 7 et pour le guider dans ses mouvements de translation (selon l'axe Z).

La première liaison glissière comporte au moins un tenon 71 disposé sur l'organe de commande 7 (visible sur les figures 3 et 4) et venant en prise sur au moins un rail 21 (visible sur la figure 5) disposé sur la parois latérale 22 du logement 20, de sorte à restreindre les mouvements latéraux (selon l'axe Y) de l'organe de commande 7 et guider sa translation (selon l'axe Z). Il est néanmoins tout à fait possible d'imaginer, sans sortir du cadre de l'invention, une disposition inverse où le rail 21 est disposé sur l'organe de commande 7 et où l'au moins un tenon 71 est disposé sur la paroi latérale 22 interne.

Dans l'exemple présenté aux figures 3 à 6, la liaison glissière comporte deux tenon 71, chaque tenon 71 étant en liaison avec un rail 21 dédié. Les rails 21 sont alignés et séparés d'un espacement. Les tenons 71 sont également séparés pour une bonne stabilité et un meilleur guidage de l'organe de commande 7.

La première liaison glissière comporte également au moins un contre-rail 25 parallèle au rail 21 et configuré pour restreindre les mouvements verticaux (selon l'axe X) de l'organe de commande 7. Le contre-rail 25 peut être disposé sur le même élément qu'un tenon 71, ici l'organe de commande 7, comme illustré sur les figures 3 et 4. Dans ce cas, le rail 21 est alors coincé entre le tenon 71 et le contre-rail 25. Cependant il est tout à fait possible d'imaginer un autre cas où le contre-rail 25 peut être disposé sur le même élément qu'un rail 21. Dans ce cas, le tenon 71 est alors disposé entre le rail 21 et le contre-rail 25.

Le tenon 71 a de préférence une section en forme de crochet, disposé sur un flanc de l'organe de commande 7 ou sur la paroi latérale interne 22 selon les cas, et dont l'extrémité coulisse dans le rail 21.

Dans le cas décrit ci-dessus et illustré au figures 3 à 6 où l'organe de commande 7 comporte deux tenons 71 ainsi qu'un contre rail 25, et où le logement 20 comporte deux rails 21 alignés et séparés, la mise en place dudit organe de commande 7 peut être réalisée selon les étapes suivantes :
- dans un premier temps l'organe de commande 7 est mis en place dans le logement 20 dans une position dite extrémale où les tenons 71 sont alignés avec les extrémités des rails 21,
- dans un deuxième temps, l'organe de commande est translaté de sorte à faire coulisser les tenons 71 contre les rails 21. Les rails 21 sont alors disposés entre les tenons 71 et le contre rail 21.

En fonctionnement, la course en translation (selon l'axe Z) de l'organe de commande 7 entraîné par l'actionneur 9, est inférieure à la longueur des rails 21 ce qui l'empêche de ressortir desdits rails 21.

L'organe de commande 7 peut également comporter une deuxième liaison glissière avec le capot 30 destiné à recouvrir le logement 20. Cette deuxième liaison glissière permet de renforcer le guidage de l'organe de commande 7 et de restreindre ses mouvements latéraux (selon l'axe Y).

Cette deuxième liaison glissière peut notamment comporter une rainure 77, parallèle à la première liaison, destinée à recevoir un tenon. Dans l'exemple présenter aux figures 3 et 4, la rainure 77 de la deuxième liaison glissière est disposée sur l'organe de commande 7 et le tenon (non représenté) est quant à lui disposé sur le capot 30, plus précisément sur sa face interne, c'est-à-dire sur sa face venant recouvrir le logement 20.

Une telle liaison entre l'organe de commande 7 et le cadre support 5 au sein de l'élément de commande 13 peut être réalisée aussi bien dans le cadre d'un élément de commande 13 comportant un logement 20 ayant son ouverture sur la face avant du cadre support 5 comme décrit ici, mais également pour tout autre type d'élément de commande 13.

Un tel organe de commande 7 garde constamment un mouvement de translation rectiligne ce qui permet de faire un élément de commande 13 le moins profond possible (selon l'axe X du trièdre).

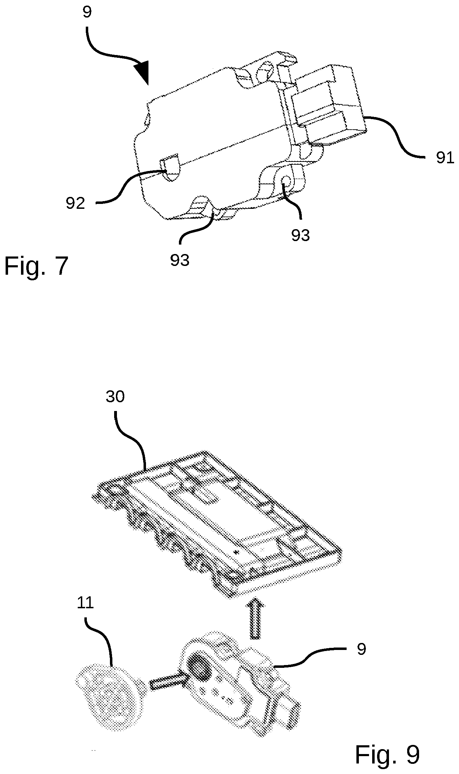

L'actionneur 9, illustré plus en détail sur la figure 7, peut être électrique, comme par exemple un moteur électrique. L'actionneur 9 applique à l'organe de commande 7 un mouvement de translation au moyen du levier 11. Cette translation se fait selon l'axe Z du trièdre. L'actionneur 9 peut plus particulièrement comprendre une fiche d'alimentation électrique 91 ainsi qu'un orifice de couplage 92 avec le levier 11. Cet orifice de couplage 92 permet notamment de mettre en rotation le levier 11.

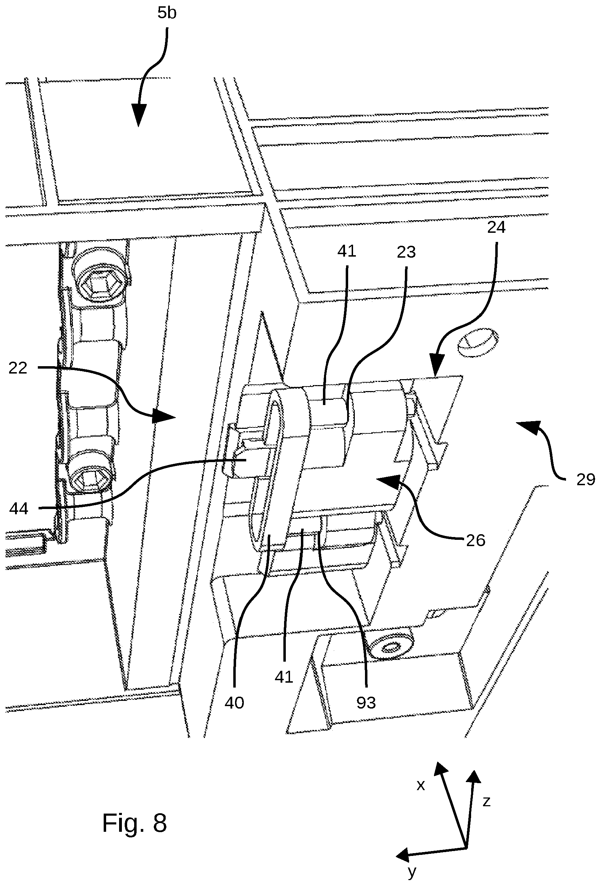

Selon un premier mode de réalisation l'actionneur 9 peut être fixé à l'intérieur du logement 20. Ce premier mode de réalisation est illustré à la figure 8 qui montre l'arrière du logement 20 et plus précisément la face arrière de son fond 29. L'arrière du logement 20 comporte au mois deux premiers orifices 23, disposés sur un plan perpendiculaire au plan formé par les axes Y et Z du trièdre. L'actionneur 9 comporte quant à lui au moins deux deuxièmes orifices 93 de fixations (visibles sur la figure 7) et destinés à venir en regard des premiers orifices 23. La fixation de l'actionneur 9 est réalisée par insertion, depuis l'extérieur du logement 20, d'une barrette 40 comportant au moins deux tiges 41 qui traversent les premiers 23 et deuxièmes 93 orifices.

Le logement 20 peut notamment comporter sur la face externe de son fond 29 une cavité 24 destinée à recevoir la barrette 40 pour une meilleure intégration. Cette cavité 24 peut également comporter sur la face interne du fond 29 du logement 20, un creux 26 (visible en négatif sur la figure 8) portant les au moins deux premiers orifices 23 et dans lequel vient s'insérer l'actionneur 9 de sorte que les premiers 23 et deuxièmes 93 orifices soient en regards l'un de l'autre.

La barrette 40 peut également être reliée à la paroi externe du logement 20 et plus précisément à la face externe du fond du logement 20 par une fixation à déformation élastique 44 afin de bloquer les mouvements en translation de ladite barrette 40.

Il est néanmoins tout à fait possible d'imaginer d'autres moyens de fixation de l'actionneur 9 dans le logement 20. L'utilisation d'une barrette 40 permet néanmoins un montage rapide ainsi qu'un démontage facilité si besoin.

Selon un deuxième mode de réalisation illustré à la figure 9, l'actionneur 9 peut être fixé sur la face interne du capot 30. La fixation de l'actionneur 9 au capot 30 peut être réalisée par n'importe quelle type de fixation par exemple par collage, emboîtage ou au moyen de vis ou rivets.

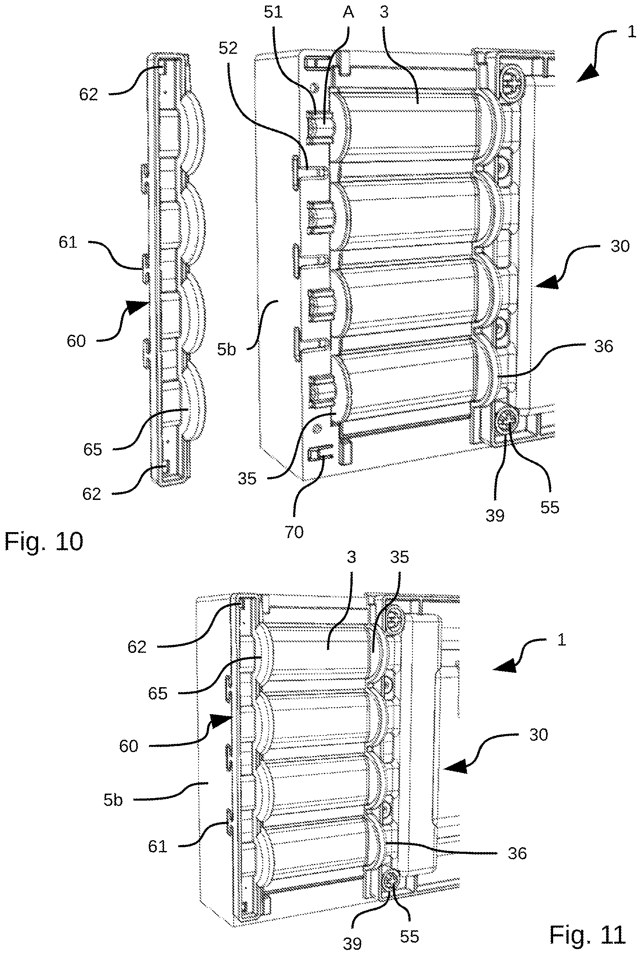

Le capot 30 peut quant à lui être fixé sur le cadre support 5 au dessus de l'ouverture du logement 20 par une fixation à emboîtage élastique, par exemple au moyen d'ergots 55 venant s'emboîter dans des orifices 39 (visibles sur les figures 10 et 11) dédiés sur le capot 30. Une fixation aussi «faible» est possible du fait que l'ouverture du logement 20 et le capot 30 sont disposés sur la face avant du cadre support 5. Ainsi, lors du roulage du véhicule, la pression de l'air vient plaquer le capot 30 contre le cadre support 5 ce qui réduit les contraintes de fixation.

Il est néanmoins tout à fait possible d'imaginer tout autre moyen de fixation, par exemple au moyen de vis ou rivets.

Le capot 30 peut également recouvrir une rangée de paliers 51. De ce fait, lorsque les volets 3 sont installés et que les axes de pivotement A sont insérés dans les paliers 51, le capot 30 peut maintenir une extrémité des volets 3.

Afin de maintenir les volets 3 dans les paliers 51 au niveau des montants latéraux 5b du cadre support 5, notamment au niveau des paliers non recouverts par le capot 30, le dispositif d'obturation 1 peut comporter au moins un élément de blocage 60, comme illustré sur les figures 2, 10 et 11. Cet élément de blocage 60 recouvre une rangée de palier 51 et maintien les axes de pivotement A des volets 3 dans lesdits paliers 51.

L'élément de blocage 60 comprend un corps qui peut ainsi être une bande rigide fixée sur le cadre support 5. Pour cette fixation au cadre support, l'élément de blocage 60 peut comporter au moins un organe de liaison 61 faisant sailli dudit élément de blocage 60. Cet organe de liaison 61 comporte plus particulièrement une base le reliant audit élément de blocage 60 et une tête de largeur supérieure à ladite base. De préférence, l'organe de liaison 61 à une forme générale en T.

De façon complémentaire, le montant latéral 5b comporte, sur sa face comprenant la au moins une rangée de palier 51, au moins une rainure 52 débouchant sur un coté extérieur dudit montant latéral 5b. Cette rainure 52 est de forme complémentaire à l'organe de liaison 61. Comme illustré sur la figure 11, les organes de liaison 61 viennent s'insérer dans les rainures 52 pour maintenir les volets 3.

L'élément de blocage 60 est de préférence fixé sur le cadre support 5 comprenant la rangée de palier 51 afin qu'il ne se dégage pas des rainures 52. Cette fixation peut être réalisée par une fixation à emboîtage élastique. Cette fixation à emboîtage élastique peut notamment comporter une languette élastique 70 dont une première extrémité comporte un embout faisant sailli vers l'extérieur du cadre support 5 et dont une deuxième extrémité est reliée audit cadre support 5. Cet embout est destiné à venir s'insérer dans une ouverture 62 ménagée dans l'élément de blocage 60. Cet embout comporte plus particulièrement un chanfrein permettant l'assemblage par translation de l'élément de blocage 60 sur le montant latéral 5b en déformant la languette élastique 70 jusqu'à l'insertion de l'embout dans l'ouverture 62. L'embout comporte également une surface plane, opposée au chanfrein et qui fait obstacle en translation au démontage de l'élément de blocage 60 du montant latéral.

Il est tout à fait possible également d'imaginer une fixation à emboîtage élastique inverse où la languette élastique 70 et son embout sont disposés sur l'élément de blocage 60 et où l'embout est destiné à venir s'insérer dans une ouverture ménagée dans le cadre support 5.

La mise en place de l'élément de blocage 60 est réalisée après le montage des volets 3 sur le cadre support 5. Cette mise en place consiste tout d'abord à mettre en regard l'au moins un organe de liaison 61 de l'élément de blocage 60 avec l'au moins une rainure 52 du cadre support 5. Ensuite, l'élément de blocage 60 est translaté de sorte que l'au moins un organe de liaison 61 s'insère dans l'au moins une rainure 52 et de sorte que l'élément de blocage 60 recouvre la rangée de paliers 51.

Une telle fixation des volets 3 au moyen d'un tel élément de blocage 60 permet un montage simplifié et rapide du dispositif d'obturation 1 car il ne nécessite pas l'utilisation d'outils spécifiques pour assurer le maintien des volets 3 dans les paliers 51. De plus une telle fixation reste réversible sans endommager le cadre support 5, les volets 3 ou l'élément de blocage 60 lui même. Cela est avantageux en cas de réparation à effectuer sur le dispositif d'obturation 1.

Une telle fixation des volets 3 peut être réalisée aussi bien dans le cadre d'un dispositif d'obturation 1 dont la au moins une rangée de paliers 51 est réalisée sur la face avant du cadre support 5 comme décrit ici, mais également pour tout autre type de dispositif d'obturation 1.

Comme illustré sur les figures 2, 3, et 10, les volets 3 peuvent comporter des flasques 35 à leurs extrémités. De façon complémentaire, l'élément de blocage 60 peut quand à lui comporter des joues 65 semi-sphériques venant recouvrir les flasques 35 des volets 3, plus particulièrement au niveau des extrémités et des axes de pivotement A des volets 3 que ledit élément de blocage 60 maintien. De même, le capot 30 peut lui également comporter des joues 36 semi-sphériques venant recouvrir les flasques 35 des volets 3, plus particulièrement au niveau des extrémités et des axes de pivotement A des volets 3 que ledit capot recouvre. Ces flasques 35 et ces joues 65, 36 semi-sphériques forment une barrière de protection qui réduit la quantité de poussière et débris qui pourraient arriver au niveau des paliers 51 et à l'intérieure du logement 20 et qui pourraient gripper le pivotement des volets 3.

La présente invention concerne également un procédé de fabrication d'un dispositif d'obturation 1 pour entrée d'air de face avant de véhicule automobile tel que décrit précédemment.

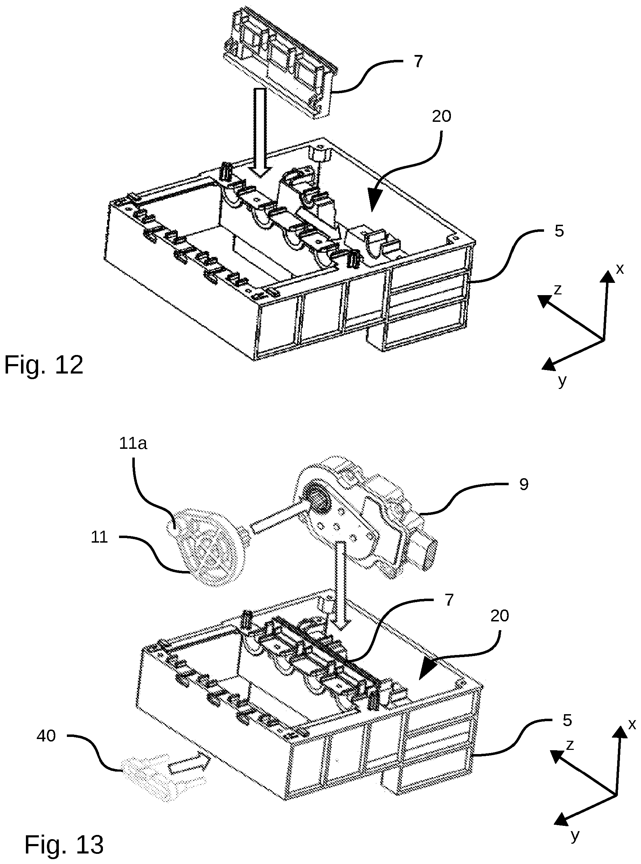

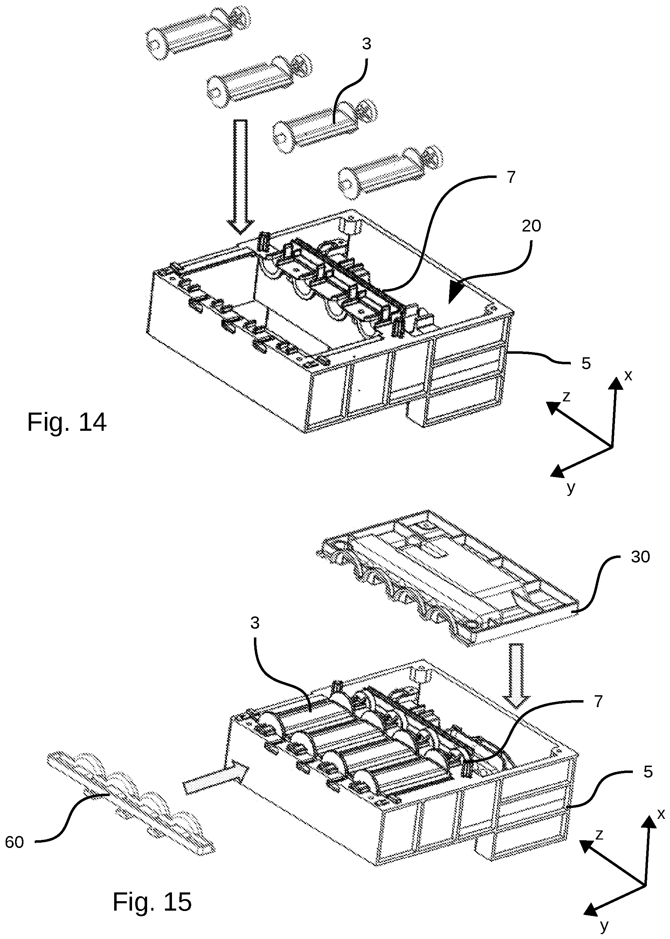

Selon un premier mode de réalisation de ce procédé de fabrication, le procédé comprend notamment :
- une première étape, illustrée à la figure 12, d'installation de l'au moins un organe de commande 7 dans le logement 20 par son ouverture en face avant,
- une deuxième étape, illustrée à la figure 13, de fixation de l'actionneur 9 muni du levier 11 dans le logement 20, et de mise en place de la liaison entre le levier 11 et l'organe de commande 7. Dans cette deuxième étape, il est important que l'actionneur 9 et le levier 9 soient assemblés l'un avec l'autre préalablement afin de permettre un montage aisé sans manipulations difficiles,
- une troisième étape, illustrée à la figure 14, d'installation des volets 3 dans les paliers 51 et de mise en place de la liaison entre les volets 3 et l'organe de commande 7, au niveau des bras de commande 39, et
- une quatrième étape, illustrée à la figure 15, de fixation des volets 3 par :
   ∘ mise en place et fixation du capot 30 sur le cadre support 5 de sorte à refermer le logement, et
   ∘ mise en place et fixation du au moins un élément de blocage 60.

Selon un deuxième mode de réalisation de ce procédé de fabrication, le procédé comprend notamment :
- une première étape, illustrée à la figure 12, d'installation de l'au moins un organe de commande 7 dans le logement 20 par son ouverture en face avant,
- une deuxième étape, illustrée à la figure 14, d'installation des volets 3 dans les paliers 51 et de mise en place de la liaison entre les volets 3 et l'organe de commande 7, au niveau des bras de commande 39, et
- une troisième étape de fixation des volets 3 comprenant :
- une première sous-étape de fixation sur la face interne du capot 30 de l'actionneur 9 muni du levier 11 comme illustré à la figure 9,
- une deuxième sous-étape de mise en place et de fixation du capot 30 sur le cadre support 5 de sorte à refermer le logement 20 et de sorte que la liaison entre le levier 11 et l'organe de commande 7 puisse être réalisée, et
- une troisième sous-étape de mise en place et de fixation du au moins un élément de blocage 60.

Ainsi, on voit bien que grâce à la présence de l'élément de blocage 60, les volets 3 sont aisément fixés et disposés dans les paliers 51. De plus, le démontage et le remontage des volets est facilité en cas d'intervention pour entretien ou réparation du fait de l'élément de blocage 60.

## Revendications

1. Dispositif d'obturation (1) pour entrée d'air de face avant de véhicule automobile, comprenant :
∘ un cadre support (5) dans lequel est installé au moins un ensemble de volets (3) pivotants autour d'axes de pivotement (A) entre une position d'obturation et une position d'ouverture,
° au moins un élément de commande (13) configuré pour piloter le positionnement des volets (3),
le cadre support (5) comportant au moins une rangée de paliers (51) recevant les axes de pivotement (A) des volets (3) disposée sur un montant latéral (5b),
le dispositif d'obturation (1) comportant au moins un élément de blocage (60) recouvrant une rangée de paliers (51) et maintenant les axes de pivotement (A) des volets (3) dans lesdits paliers (51),
ledit élément de blocage (60) comprenant un corps et au moins un organe de liaison (61) comportant une base le reliant audit corps de l'élément de blocage (60) et une tête de largeur supérieure à ladite base,
ledit montant latéral (5b) comportant, sur sa face comprenant la au moins une rangée de palier (51), au moins une rainure (52) débouchant sur un coté extérieur dudit montant latéral (5b) et de préférence de forme complémentaire audit au moins un organe de liaison (61), ledit au moins un organe de liaison (61) étant inséré dans la au moins une rainure (52), et
l'élément de blocage (60) est fixé sur le cadre support (5) comprenant la rangée de paliers (51) par une fixation à emboîtage élastique de sorte à retenir le au moins un organe de liaison (61) dans la au moins une rainure (52), **caractérisé en ce que** la fixation à emboîtage élastique comporte une languette élastique (70) dont une première extrémité comporte un embout faisant saillie vers l'extérieur du cadre support (50) et dont une deuxième extrémité est reliée audit cadre support (5), ledit embout étant destiné à venir s'insérer dans une ouverture (62) ménagée dans l'élément de blocage (60).

2. Dispositif d'obturation (1) selon la revendication précédente, dans lequel l'organe de liaison (61) fait saillie du corps de l'élément de blocage (60).

3. Dispositif d'obturation (1) selon l'une des revendications précédentes, **caractérisé en ce que** l'au moins un organe de liaison (61) a une forme générale en T.

4. Dispositif d'obturation (1) selon l'une des revendications précédentes, **caractérisé en ce que** les volets (3) comportent des flasques (35) à leurs extrémités et **en ce que** l'élément de blocage (60) comporte des joues (65) semi-sphériques venant recouvrir les flasques (35) desdits volets (3).

5. Dispositif d'obturation (1) selon l'une des revendications précédentes, **caractérisé en ce que** la au moins une rangée de paliers (51) est réalisée sur la face avant du cadre support (5).

6. Procédé de fabrication d'un dispositif d'obturation (1) selon l'une des revendications précédentes, **caractérisé en ce qu'**il comporte, après le montage des volets (3) sur le cadre support (5), les étapes suivantes :
∘ mise en regard du au moins un organe de liaison (61) de l'élément de blocage (60) et de la au moins une rainure (52) du cadre support (5),
∘ translation de l'élément de blocage (60) de sorte que l'au moins un organe de liaison (61) s'insère dans l'au moins une rainure (52) et de sorte que l'élément de blocage (60) recouvre une rangée de paliers (51).

## Patentansprüche

1. Verschlussvorrichtung (1) für den vorderen Lufteinlass eines Kraftfahrzeugs, umfassend:
∘ einen Tragrahmen (5), in dem zumindest ein Satz von Klappen (3) installiert ist, die um Schwenkachsen (A) zwischen einer Verschlussposition und einer Öffnungsposition schwenkbar sind,
∘ zumindest ein Steuerelement (13), das konfiguriert ist, um die Positionierung der Klappen (3) zu steuern, wobei der Tragrahmen (5) zumindest eine Reihe von Lagern (51) aufweist, die die an einem seitlichen Pfosten (5b) angeordneten Schwenkachsen (A) der Klappen (3) aufnehmen,
wobei die Verschlussvorrichtung (1) zumindest ein Sicherungselement (60) aufweist, das eine Reihe von Lagern (51) bedeckt und die Schwenkachsen (A) der Klappen (3) in den Lagern (51) hält,
wobei das Sicherungselement (60) einen Körper und zumindest ein Verbindungsorgan (61) umfasst, das eine Basis, die es mit dem Körper des Sicherungselements (60) verbindet, und einen Kopf mit größerer Breite als die Basis aufweist,
wobei der seitliche Pfosten (5b) auf seiner die zumindest eine Reihe von Lagern (51) aufweisenden Seite zumindest eine Nut (52) aufweist, die auf eine Außenseite des seitlichen Pfostens (5b) mündest und vorzugsweise eine zu dem zumindest einen Verbindungsorgan (61) komplementäre Form aufweist, wobei das zumindest eine Verbindungsorgan (61) in die zumindest eine Nut (52) eingesetzt ist, und
wobei das Sicherungselement (60) an dem die Reihe von Lagern (51) umfassenden Tragrahmen (5) durch eine elastische Steckbefestigung befestigt ist, um das zumindest eine Verbindungsorgan (61) in der zumindest einen Nut (52) zu halten,
**dadurch gekennzeichnet, dass**
die elastische Steckbefestigung eine elastische Zunge (70) aufweist, deren erstes Ende eine zur Außenseite des Tragrahmens (50) vorstehende Spitze aufweist und deren zweites Ende mit dem Tragrahmen (5) verbunden ist, wobei die Spitze dazu bestimmt ist, in eine im Sicherungselement (60) vorgesehene Öffnung (62) eingeführt zu werden.

2. Verschlussvorrichtung (1) nach dem vorangehenden Anspruch, wobei das Verbindungsorgan (61) vom Körper des Sicherungselements (60) vorsteht.

3. Verschlussvorrichtung (1) nach einem der vorangehenden Ansprüche, **dadurch gekennzeichnet, dass** das zumindest eine Verbindungsorgan (61) eine allgemeine T-Form aufweist.

4. Verschlussvorrichtung (1) nach einem der vorangehenden Ansprüche, **dadurch gekennzeichnet, dass** die Klappen (3) an ihren Enden Flansche (35) aufweisen und dass das Sicherungselement (60) halbkugelförmige Wangen (65) aufweist, die die Flansche (35) der Klappen (3) bedecken.

5. Verschlussvorrichtung (1) nach einem der vorangehenden Ansprüche, **dadurch gekennzeichnet, dass** die zumindest eine Reihe von Lagern (51) an der Vorderseite des Tragrahmens (5) ausgeführt ist.

6. Verfahren zur Herstellung einer Verschlussvorrichtung (1) nach einem der vorangehenden Ansprüche, **dadurch gekennzeichnet, dass** es nach der Montage der Klappen (3) am Tragrahmen (5) die folgenden Schritte aufweist:
o Anordnen des zumindest einen Verbindungsorgans (61) des Sicherungselements (60) gegenüber der zumindest einen Nut (52) des Tragrahmens (5),
o Verschieben des Sicherungselements (60), sodass das zumindest eine Verbindungsorgan (61) in die zumindest eine Nut (52) eingreift und dass das Sicherungselement (60) eine Reihe von Lagern (51) bedeckt.

## Claims

1. Device (1) for sealing a motor vehicle front face air intake, comprising:
∘ a supporting frame (5) in which is installed at least one set of flaps (3) pivoting about pivot pins (A) between a closed position and an open position,
∘ at least one control element (13) configured to control the positioning of the flaps (3),
the supporting frame (5) including at least one row of bearings (51) receiving the pivot pins (A) of the flaps (3) arranged on a side pillar (5b),
the sealing device (1) including at least one locking element (60) covering one row of bearings (51) and holding the pivot pins (A) of the flaps (3) in said bearings (51),
said locking element (60) comprising a body and at least one connection member (61) including a base connecting it to said body of the locking element (60) and a head wider than said base,
said side pillar (5b) including, on the face thereof comprising the at least one row of bearings (51), at least one slot (52) opening onto an outer side of said side pillar (5b) and preferably having a shape complementing said at least one connection member (61), said at least one connection member (61) being inserted into the at least one slot (52),
and the locking element (60) is secured to the supporting frame (5) comprising the row of bearings (51) by a snap fitting so as to retain the at least one connection member (61) in the at least one slot (52),
**characterized in that**
the snap fitting includes a flexible tab (70) a first end of which includes an end piece projecting towards the outside of the supporting frame (50) and a second end of which is connected to said supporting frame (5), said end piece being intended for being inserted into an opening (62) made in the locking element (60).

2. Sealing device (1) according to the previous claim, in which the connection member (61) projects from the body of the locking element (60).

3. Sealing device (1) according to either of the previous claims, **characterized in that** the at least one connection member (61) is generally T-shaped.

4. Sealing device (1) according to one of the previous claims, **characterized in that** the flaps (3) include flanges (35) at the ends thereof and **in that** the locking element (60) includes hemispherical cheeks (65) covering the flanges (35) of said flaps (3).

5. Sealing device (1) according to one of the previous claims, **characterized in that** the at least one row of bearings (51) is made on the front face of the supporting frame (5).

6. Method for manufacturing a sealing device (1) according to one of the previous claims, **characterized in that** it includes, after the flaps (3) have been mounted on the supporting frame (5), the following steps:
∘ placing the at least one connection member (61) of the locking element (60) and the at least one slot (52) of the supporting frame (5) facing each other,
∘ translating the locking element (60) so that the at least one connection member (61) is inserted into the at least one slot (52) and so that the locking element (60) covers a row of bearings (51).
